# EUROPEAN PATENT SPECIFICATION

(11) **EP 1 637 579 B1**
(45) Date of publication and mention of the grant of the patent: **06.04.2011**
(21) Application number: 04731713.6
(22) Date of filing: 07.05.2004
(51) Int. Cl.: C10M 111/06, C10M 169/04, F16C 33/10, C10N 50/08, C10N 30/06

(54) **SOLID LUBRICANT AND SLIDING MEMBER**
FESTES SCHMIERMITTEL UND GLEITGLIED
LUBRIFIANT SOLIDE ET ELEMENT COULISSANT

(30) Priority: 13.05.2003 JP 2003133923
(43) Date of publication of application: 22.03.2006
(73) Proprietor: OILES CORPORATION, Minato-ku Tokyo (JP)
(72) Inventor: ROKUGAWA, Masayuki, c/o Fujisawa Plant, Fujisawa-shi, Kanagawa 2520811 (JP); HIRAYAMA, Takuya, c/o Fujisawa Plant, Fujisawa-shi, Kanagawa 2520811 (JP)
(74) Representative: Woods, Geoffrey Corlett
(86) International application number: PCT/JP2004/006028
(87) International publication number: WO 2004/101718

(56) References cited:
- EP-A- 1 586 623
- WO-A1-2004/046285
- JP-A- 6 313 186
- JP-A- 51 046 668
- JP-A- 54 012 072
- JP-A- 55 108 427
- JP-A- 55 110 194
- JP-A- 63 072 741
- JP-A- 2002 037 988
- DATABASE WPI Section Ch, Week 199009 Derwent Publications Ltd., London, GB; Class A26, AN 1990-064424 XP002447136 -& JP 02 016193 A (KYODO YUSHI) 19 January 1990 (1990-01-19)
- DATABASE WPI Section Ch, Week 197623 Derwent Publications Ltd., London, GB; Class A17, AN 1976-42799X XP002442113 -& JP 51 046668 A (OILES INDUSTRY CO LTD) 21 April 1976 (1976-04-21)

## Description

### TECHNICAL FIELD

The present invention relates to a solid lubricant and a sliding member, and more particularly, to a solid lubricant for being embedded in pores or grooves formed at a sliding surface of a sliding member body and a sliding member therefrom.

### BACKGROUND ART

Solid lubricants which are embedded at a sliding surface of a sliding member such as bearings, form a thin film on the sliding surface and exhibit a sliding effect. Therefore, a film-forming capability of the solid lubricants has a large influence on friction coefficient and life of the resultant film. As such solid lubricants, there are known solid lubricants having lamellar structures, especially, a solid lubricant containing graphite as a main component. The graphite exhibits a large resistivity in the direction of load applied thereto, but exhibits a small resistivity in the sliding direction caused by the lamellar structure. Furthermore, the graphite is a soft and able to keep good lubrication performance over a broad temperature range of from an ordinary temperature to a high temperature.

The solid lubricant containing graphite as a main component, however, tends to be not only insufficient in film-forming capability to some extent, but also unsatisfactory in film life when repeatedly exposed to frictional contact. Therefore, such solid lubricant is not suitable for use in low-speed and high-load applications.

While, as solid lubricants used in high-load applications, there are exemplified a solid lubricant prepared by blending a polytetrafluoroethylene resin, a wax, a soft metal such as indium, lead and tin with each other. Especially, a solid lubricant prepared by blending polytetrafluoroethylene resin with lead and a wax is widely used. Such solid lubricant exhibits an extremely low coefficient of friction under high-load conditions, an excellent film-forming capability, a long film life and a high self-repairing ability for the film.

Recently, lead-free materials tend to be developed in the consideration of avoiding environmental problems. This tendency of the material development has also been present in the field of solid lubricants. However, in the solid lubricants, lead is an important component for attaining satisfactory sliding properties of solid lubricants. Particularly, in the case where the solid lubricant are embedded in pores or grooves formed at the sliding surface of a sliding member such as bearings and used under high-load conditions, lead is important from the standpoint of imparting a good film-forming capability.

As an example of a lead-free sliding member, there is described the sliding member produced by molding a resin containing an adduct of melamine and isocyanuric acid (Japanese Patent Application Laid-Open (KOKAI) No. 55-108427). In the case where the resin composition for the sliding member containing the adduct of melamine and isocyanuric acid is used as a solid lubricant, the coefficient of friction tends to be insufficient under high-load conditions. Therefore, it has been demanded to provide a lead-free solid lubricant exhibiting sufficient sliding properties even under high-load conditions.

JP2016193 describes a silicone grease comprising a silicone oil and a solid lubricant as a thickening agent, wherein the solid lubricant comprises a melamine/(iso)cyanuric acid adduct and polytetrafluoroethylene.

JP 51 046668A describes a mixture consisting of 10-50 wt% of paraffin, 5-20 wt% of polyethylene and 30-80 wt% of a solid lubricant powder which is filled into a caved section provided in a bearing parent member.

### DISCLOSURE OF THE INVENTION

### PROBLEM TO BE SOLVED OF THE INVENTION

The present invention has been conducted for solving the above-described problems. The object of the present invention is to provide a lead-free solid lubricant capable of exhibiting sliding properties which are identical to or higher than those of conventional lead-containing solid lubricants, even under high-load conditions.

### MEANS FOR SOLVING THE PROBLEM

In a first aspect of the present invention, there is provided a solid lubricant comprising: 20 to 40% by weight of at least one wax selected from hydrocarbon-based waxes, higher-fatty acids, esters of higher-fatty acid and amides of higher-fatty acid, wherein higher fatty acids have not less than 12 carbon atoms, 20 to 40% by weight of melamine cyanurate and 20 to 50% by weight of a polytetrafluoroethylene resin.

In a second aspect of the present invention, there is provided a sliding member comprising a sliding member body, and the above solid lubricant, which is embedded in pores or grooves formed at the sliding surface of the sliding member body.

The present invention further provides use of a composition comprising:
20 to 40% by weight of at least one wax selected from hydrocarbon waxes, higher-fatty acids, esters of higher-fatty acid and amides of higher-fatty acid, wherein higher fatty acids have not less than 12 carbon atoms,
20 to 40% by weight of melamine cyanurate, and
20 to 50% by weight of a polytetrafluoroethylene resin, as a solid lubricant.

### EFFECT OF THE INVENTION

According to the present invention, there is provided a lead-free solid lubricant for being embedded in pores or grooves formed at a sliding surface of a sliding member body, which is identical to or higher than those of conventional lead-containing solid lubricants, even under high-load conditions.

### BEST MODE FOR CARRYING OUT THE INVENTION

The embodiments of the present invention are described in detail below. First, a solid lubricant is described. The wax has an effect for lowering a coefficient of friction. The wax used in the present invention is one or more of waxes selected from the group consisting of hydrocarbon-based waxes, higher-fatty acids, esters of higher-fatty acid and amides of higher-fatty acid.

The hydrocarbon-based waxes may include parafinic waxes having not less than 24 carbon atoms, olefinic waxes having not less than 26 carbon atoms, alkylbenzenes having not less than 28 carbon atoms and crystalline micro crystalline waxes. These hydrocarbon-based waxes may be used singly or in the form of a mixture of any two or more thereof.

The higher-fatty acids may include saturated or unsaturated fatty acids having not less than 12 carbon atoms. Specific examples of the higher-fatty acids may include lauric acid, myristic acid, palmitic acid, stearic acid, arachic acid, behenic acid, cerotic acid, montanic acid, melissic acid, lauroleic acid, myristoleic acid, oleic acid, elaidic acid, linolic acid, linolenic acid, arachidonic acid, gadoleic acid and erucic acid.

The esters of higher-fatty acid are esters of the above higher-fatty acids with monohydric or polyhydric alcohols. Examples of the monohydric alcohols may include capryl alcohol, lauryl alcohol, myristyl alcohol, palmityl alcohol, stearyl alcohol and behenyl alcohol. Examples of polyhydric alcohols may include ethylene glycol, propylene glycol, butane diol, glycerol, pentaerythritol and sorbitan. Specific examples of the esters of higher-fatty acid may include stearyl stearate, pentaerithritol tetrastearate, stearic monoglyceride and behenic monoglyceride.

The amides of higher-fatty acid are amides of the above higher-fatty acids with monoamines or polyamines. Examples of monoamines or polyamines may include capryl amine, lauryl amine, myristyl amine, palmityl amine, stearyl amine, methylenediamine, ethylenediamine and hexamethylenediamine. Specific examples of the amides of higher-fatty acid may include palmitamide, stearamide, oleamide and erucamide.

The amount of waxes blended is usually from 20 to 40% by weight, preferably from 20 to 30% by weight. When the amount of the waxes is less than 20% by weight, the resultant solid lubricant may fail to show the aimed low friction characteristics. When the amount of the waxes exceeds 40% by weight, the resultant solid lubricant tends to be deteriorated in moldability, and the molded product obtained therefrom tends to be deteriorated in strength.

The melamine cyanurate used is an adduct of melamine with cyanuric acid or isocyanuric acid. The melamine cyanurate has such a structure that the melamine molecules having a 6-membered ring structure and cyanuric acid (or isocyanuric acid) molecules having a 6-membered ring structure are arranged in plane through a hydrogen bond to form overlapped layers bonded to each other by a weak bonding force. Therefore, it is considered that the melamine cyanurate show a cleavage property similar to molybdenum disulfide or graphite. The melamine cyanurate has an effect of improving a wear resistance and a load-carrying capacity of the solid lubricant. The amount of the melamine cyanurate blended is usually from 20 to 40% by weight, preferably from 30 to 40% by weight. When the amount of the melamine cyanurate blended is less than 20% by weight, it may be difficult to obtain the aimed effect of enhancing a wear resistance and a load-carrying capacity. When the amount of the melamine cyanurate blended exceeds 40% by weight, the resultant solid lubricant tends to be deteriorated in wear resistance.

The polytetrafluoroethylene (PTFE) resins used in the present invention have an effect for improving low friction properties. The polytetrafluoroethylene resins used in the present invention may be classified to (1) polytetrafluoroethylene resins which are mainly used for molding as molding powder or fine powder (hereinafter referred to as "high molecular weight PTFE"), and (2) polytetrafluoroethylene resins which are mainly used for additives, which are easy to pulverize and exhibit a good dispersibility (hereinafter referred to as "low molecular weight PTFE"), in which the molecular weight of the polytetrafluoroethylene resin is lessened as compared with the high molecular weight PTFE by decomposing the high molecular weight PTFE by mean of radiation exposure, or by controlling the molecular weight upon the polymerization of the polytetrafluoroethylene resin. As the polytetrafluoroethylene resin used in the present invention, the high molecular weight PTFE itself or a mixture of high molecular weight PTFE and low molecular weight PTFE may be used. The mixing ratio (by weight) of the high molecular weight PTFE to the low molecular weight PTFE is usually from 1:1 to 3:1.

The high molecular weight PTFE for the molding powder may include "TEFLON (registered trademark) 7-J", "TEFLON (registered trademark) 7A-J", "TEFLON (registered trademark) 70-J", all produced by Du Pont-Mitsui Fluorochemical Co., Ltd.; "POLYFLON M-12 (tradename)" produced by Daikin Industries, Ltd.; "FLUON G-163 (tradename)", "FLUON G-190 (tradename)", both produced by Asahi Glass Co., Ltd., or the like. The high molecular weight PTFE for the fine powder may include "TEFLON (registered trademark) 6CJ" produced by Du Pont-Mitsui Fluorochemical Co., Ltd.; "POLYFLON F201 (tradename)" produced by Daikin Industries, Ltd.; and "FLUON CD076 (tradename) ", "FLUON CD090(tradename)", both produced by Asahi Glass Co., Ltd., or the like.

Further, as the high molecular weight PTFE, there are exemplified high molecular weight PTFEs modified with polymers such as polystyrene-based polymers, acrylic acid ester-based polymers, methacrylic acid ester-based polymers and acrylonitrile-based polymers other than the above-mentioned high molecular weight PTFE. For example, "METABLEN A-3000 (tradename) " produced by Mitsubishi Rayon Co., Ltd. or the like exemplified. Examples of the low molecular weight PTFE may include "TLP-10F (tradename)" produced by Du Pont-Mitsui Fluorochemical Co., Ltd.; "LUBLON L-5 (tradename)" produced by Daikin Industries, Ltd.; and "FLUON L169J (tradename)" produced by Asahi Glass Co., Ltd.; and "KTL-8N (tradename) etc. by Kitamura Limited.

The amount of polytetrafluoroethylene resin blended is usually from 20 to 50% by weight, preferably from 20 to 40% by weight. When the amount of polytetrafluoroethylene resin is less than 20% by weight, it is difficult to obtain the aimed low friction properties. When the amount of polytetrafluoroethylene resin exceeds 50% by weight, the resultant solid lubricant tends to be deteriorated in wear resistance and shape-keeping ability, and the molded products obtained therefrom tend to be deteriorated in strength.

In the present invention, a metallic soap and/or a polyethylene resin and/or a phosphate may be added to the solid lubricant as additives.

The metallic soaps used in the present invention are a salt of above-described higher-fatty acid with alkali metal or alkali earth metal. Examples of the metallic soaps may include lithium stearate and calcium stearate. These metallic soaps have an effect of not only increasing a wear resistance and decreasing a coefficient of friction but also improving a thermal stability. The amount of metallic soap blended is usually from 5 to 20% by weight, preferably from 10 to 15% by weight. When the amount of the metallic soap is less than 5% by weight, it may be difficult to obtain the aimed effect of decreasing a friction coefficient, and improving the wear resistance and thermal stability. When the amount of the metallic soap blended exceeds 20% by weight, the resultant solid lubricant tends to be deteriorated in moldability.

The polyethylene resins used in the present invention have an effect of improving a wear resistance and binding forces among ingredients of solid lubricant. The polyethylene resins used in the present invention may include a high pressure-processed low density polyethylene (HPLD), a linear low density polyethylene (LLDPE), a very low density polyethylene (VLDPE), a high density polyethylene (HDPE), an ultra high molecular weight polyethylene (UHMWPE) and a high molecular weight polyethylene (HMWPE) composed of the ultra high molecular weight polyethylene and polyethylene having from low molecular weight to high molecular weight.

The HPLD is a homopolymer of ethylene produced by highpressure process, and contains long branched chains in addition to short branched chains such as ethyl group. The density of the HPLD is usually from 0.910 to 0.940 g/cm³. The LLDPE is a copolymer of ethylene and other α-olefin (propylene, butene-1, 4-methyl pentene-1, octene-1 or the like), which is produced by medium or low-pressure process, and has a density of usually from 0.900 to 0.940 g/cm³. Of these copolymers, copolymers having density of usually from 0.925 to 0.940 g/cm³ are called as a medium density polyethylene (MDPE). The VLDPE is obtained by further decreasing the density of LLDPE and has a density of usually from 0.880 to 0.910 g/cm³. The HDPE is a homopolymer of ethylene produced by medium or low-pressure process, and has density of usually from 0.940 to 0.970 g/cm³. The UHMWPE is a polyethylene produced by low-pressure process, and has a molecular weight of usually not less than 100 million and a density of usually about 0.940 g/cm³.

The amount of polyethylene resin blended is usually from 5 to 20% by weight, preferably from 10 to 15% by weight. When the amount of the polyethylene resin blended is less than 5% by weight, the polyethylene resin may fail to exhibit a sufficient effect as a binder. When the amount of the polyethylene resin blended exceeds 20% by weight, the amounts of each ingredients for producing the solid lubricant are comparatively small, so that it is difficult to obtain a good lubrication property. As the phosphates, there may be exemplified tertiary phosphates, secondary phosphates, pyrophosphates, phosphites and metaphosphates of alkali metals or alkalie earth metal. Examples of the phosphates may include trilithium phosphate, dilithium hydrogenphosphate, lithium pyrophosphate, tricalcium phosphate, calcium monohydrogenphosphate, calcium pyrophosphate, lithium metaphosphate, magnesium metaphosphate and calcium metaphosphate. Although phosphates themselves do not show a lubrication property, phosphates exhibit an effect of promoting the formation of lubrication film on a surface of the mating member upon sliding thereon, so that it is possible to always form and keep good lubrication film on the surface of the mating member, thereby maintaining good sliding properties.

The amount of phosphates blended is usually from 5 to 15% by weight, preferably from 10 to 15% by weight. When the amount of the phosphates blended is less than 5% by weight, the phosphates may fail to exhibit a sufficient effect of promoting the formation of lubrication film on the surface of the mating member. When the amount of phosphates blended exceeds 20% by weight, the amount of lubrication film transferred and attached on the surface of the mating member tend to be excessively large, so that the resultant sliding member tends to be deteriorated in wear resistance.

The solid lubricant of the present invention can be produced by mixing the above respective components with each other at a predetermined mixing ratio using mixers such as a Henschel mixer, a Super mixer, a ball mill and a tumbler, and then molding the resultant mixture into a desired shape. The molding method is not particularly limited, but there may be usually used such a molding method in which the obtained mixture is supplied to an extruder and melt-kneaded therein at a temperature capable of melting the waxes to prepare pellets, and then the obtained pellets are supplied to an injection-molding machine and injection-molded therefrom.

The sliding member of the present invention is produced by embedding the solid lubricant obtained by the above-described process into pores or grooves formed at the sliding surface of the sliding member body composed of metals or synthetic resins. Examples of the method of embedding the solid lubricant into pores or grooves formed at the sliding surface of the sliding member body may include a press fitting method and adhesive fitting method of applying an adhesive on the surface of the molded solid lubricant and puts the resultant solid lubricant into the pores or grooves.

### EXAMPLES

The present invention is described in more detail by Examples, but the Examples are only illustrative and not intended to limit the scope of the invention.

### Example 1:

50 % by weight of high molecular weight PTFE ("FLUON G163 (tradename)" produced by Asahi Glass Co., Ltd.) as polytetrafluoroethylene resin, 10% by weight of polyethylene wax ("LICOWAX PE520 (tradename)" produced by Clariant Japan Corporation), 10% by weight of paraffin wax ("150 (tradename)" produced by Nippon Seiro Co., Ltd.) as hydrocarbon-based wax and 30% by weight of melamine cyanurate ("MCA (tradename)" produced by Mitsubishi Chemical Corporation) were introduced into Henschel mixer and mixed with each other therein to produce a mixture. The obtained mixture was introduced into an extruder and melt-kneaded therein to obtain a string-shaped molding. The obtained string-shaped molding was cut to fine pieces to produce pellets composed of the mixture. Then, the obtained pellets were supplied to an injection-molding machine and injection-molded to obtain a cylindrical solid lubricant having a diameter of 6 mm and a length of 5 mm.

### Examples 2 to 23 and Comparative Examples 1 and 3:

The same procedure as defined in Example 1 was conducted except that the composition was variously changed as shown in Tables 2 to 8, thereby obtaining cylindrical solid lubricants having a diameter of 6 mm and a length of 5 mm.

### Comparative Example 2:

50 % by volume of PTFE powder ("TEFLON (registered trademark) 7A-J" produced by Du Pont-Mitsui Fluorochemical Co., Ltd.) and 40% by volume of atomized lead powder were mixed and stirred to obtain a mixture. The resultant mixture was pressure-molded to produce a cylindrical solid lubricant having a diameter of 6 mm and a length of 5 mm, using a pressure-molding machine. The obtained cylindrical solid lubricant was dipped in lubricating oil solution ("DTE extra heavy oil (tradename) produced by Mobile Co., Ltd.) in an oil bath to impregnate 10% by volume of the lubricating oil, thereby obtaining a solid lubricant containing the PTFE of 18.8% by weight, lead of 79.6% by weight and lubricating oil of 1.6% by weight.

The solid lubricant obtained from above-described examples or comparative examples were embedded in pores formed at the sliding surface of a plane body composed of cupper alloy to prepare specimens for sliding member test. The obtained test specimens were subjected to thrust test to measure the sliding properties. The testing conditions are shown in Table 1. The obtained sliding properties are shown in Tables 2 to 8.

**Table 1**

| | |
|---|---|
| Material of test specimen | High strength brass fourth-class casting |
| Material of mating member | Stainless steel (SUS403) |
| Area ratio occupied by solid lubricant in sliding surface of specimen | 30% |
| Sliding velocity | 0.5 m/min |
| Load | 300 kgf/cm² |
| Lubrication | None |
| Testing time | 10 hr |

**Table 2**

| | Ex. 1 | Ex. 2 | Ex. 3 | Ex. 4 |
|---|---|---|---|---|
| Composition | | | | |
| PTFE | | | | |
| • High Molecular | 50 | 40 | 30 | 50 |
| Weight PTFE | | | | |
| • Low Molecular Weight | - | - | - | - |
| PTFE | | | | |
| Waxes | | | | |
| Hydrocarbon-based Waxes | | | | |
| • Polyethylene wax | 10 | 10 | 15 | - |
| • Paraffin wax | 10 | 10 | 15 | - |
| • Micro crystalline wax | - | - | - | 20 |
| Higher-fatty acid | | | | |
| • Stearic acid | - | - | - | - |
| Melamine cyanurate | 30 | 40 | 40 | 30 |
| Metallic soap | | | | |
| • Lithium stearate | - | - | - | - |
| • Zinc stearate | - | - | - | - |
| • Calcium stearate | - | - | - | - |
| Polyethylene Resin | | | | |
| • HDPE | - | - | - | - |
| • LDPE | - | - | - | - |
| • HMWPE | - | - | - | - |
| Phosphates | | | | |
| • Calcium pyrophosphate | - | - | - | - |
| • Tricalcium phosphate | - | - | - | - |
| Various properties | | | | |
| • Friction coefficient | 0.072- 0.085 | 0.086-0.093 | 0.088-0.096 | 0.078-0.088 |
| • Wear amount (µm) | 4 | 4 | 4 | 4 |

**Table 3**

| | Ex. 5 | Ex. 6 | Ex. 7 | Ex. 8 |
|---|---|---|---|---|
| Composition | | | | |
| PTFE | | | | |
| • High Molecular Weight PTFE | 25 | 20 | 15 | 25 |
| • Low Molecular Weight PTFE | 25 | 20 | 15 | 25 |
| Waxes | | | | |
| Hydrocarbon-based Waxes | | | | |
| • Polyethylene wax | 10 | 10 | 15 | - |
| • Paraffin wax | 10 | 10 | 15 | - |
| • Micro crystalline wax | - | - | - | 20 |
| Higher-fatty acid | | | | |
| • Stearic acid | - | - | - | - |
| Melamine cyanurate | 30 | 40 | 40 | 30 |
| Metallic soap | | | | |
| • Lithium stearate | - | - | - | - |
| • Zinc stearate | - | - | - | - |
| • Calcium stearate | - | - | - | - |
| Polyethylene Resin | | | | |
| • HDPE | - | - | - | - |
| • LDPE | - | - | - | - |
| • HMWPE | - | - | - | - |
| Phosphates | | | | |
| • Calcium pyrophosphate | - | - | - | - |
| • Tricalcium phosphate | - | - | - | - |
| Various properties | | | | |
| • Friction coefficient | 0.086-0.100 | 0.092-0.110 | 0.093-0.094 | 0.090-0.098 |
| • Wear amount (µm) | 4 | 4 | 4 | 4 |

**Table 4**

| | Ex. 9 | Ex. 10 | Ex. 11 |
|---|---|---|---|
| Composition | | | |
| PTFE | | | |
| • High Molecular Weight PTFE | 20 | 30 | 40 |
| • Low Molecular Weight | - | - | - |
| PTFE | | | |
| Waxes | | | |
| Hydrocarbon-based Waxes | | | |
| • Polyethylene wax | 15 | 10 | 10 |
| • Paraffin wax | 15 | 10 | 10 |
| • Micro crystalline wax | - | - | - |
| Higher-fatty acid | | | |
| • Stearic acid | 10 | 10 | 10 |
| Melamine cyanurate | 40 | 40 | 30 |
| Metallic soap | | | |
| • Lithium stearate | - | - | - |
| • Zinc stearate | - | - | - |
| • Calcium stearate | - | - | - |
| Polyethylene Resin | | | |
| • HDPE - | - | - | - |
| • LDPE | - | - | - |
| • HMWPE | - | - | - |
| Phosphates | | | |
| • Calcium pyrophosphate | - | - | - |
| • Tricalcium phosphate | - | - | - |
| Various properties | | | |
| • Friction coefficient | 0.073-0.085 | 0.088-0.097 | 0.073-0.085 |
| • Wear amount (µm) | 0.5 | 1 | 3 |

**Table 5**

| | Ex. 12 | Ex. 13 | Ex. 14 | Ex. 15 |
|---|---|---|---|---|
| Composition | | | | |
| PTFE | | | | |
| • High Molecular Weight PTFE | 20 | 20 | 20 | 20 |
| • Low Molecular weight | - | - | - | - |
| PTFE | | | | |
| Waxes | | | | |
| Hydrocarbon-based Waxes | | | | |
| • Polyethylene wax | 30 | 15 | - | - |
| • Paraffin wax | - | 15 | 30 | - |
| • Micro crystalline wax | - | - | - | 30 |
| Higher-fatty acid | | | | |
| • Stearic acid | - | - | - | - |
| Melamine cyanurate | 40 | 40 | 40 | 40 |
| Metallic soap | | | | |
| • Lithium stearate | 10 | - | - | - |
| • Zinc stearate | - | 10 | - | - |
| • Calcium stearate | - | - | 10 | 10 |
| Polyethylene Resin | | | | |
| • HDPE | - | - | - | - |
| • LDPE | - | - | - | - |
| • HMWPE | - | - | - | - |
| Phosphates | | | | |
| • Calcium pyrophosphate | - | - | - | - |
| • Tricalcium phosphate | - | - | - | - |
| Various properties | | | | |
| • Friction coefficient | 0.094-0.096 | 0.088-0.095 | 0.080-0.085 | 0.083-0.087 |
| • Wear amount (µm) | 2 | 2 | 1 | 1 |

**Table 6**

| | Ex. 16 | Ex. 17 | Ex. 18 | Ex. 19 |
|---|---|---|---|---|
| Composition | | | | |
| PTFE | | | | |
| • High Molecular Weight PTFE | 20 | 20 | 20 | 20 |
| • Low Molecular Weight PTFE | - | - | - | - |
| Waxes | | | | |
| Hydrocarbon-based Waxes | | | | |
| • Polyethylene wax | 10 | 15 | - | - |
| • Paraffin wax | 10 | 15 | 20 | - |
| • Micro crystalline wax | - | - | - | 20 |
| Higher-fatty acid | | | | |
| • Stearic acid | 10 | 10 | 10 | 10 |
| Melamine cyanurate | 40 | 30 | 40 | 40 |
| Metallic soap | | | | |
| • Lithium stearate | - | - | - | - |
| • Zinc stearate | - | - | - | - |
| • Calcium stearate | - | - | - | - |
| Polyethylene Resin | | | | |
| • HDPE | 10 | - | - | - |
| • LDPE | - | 10 | 10 | - |
| • HMWPE | - | - | - | 10 |
| Phosphates | | | | |
| • Calcium pyrophosphate | - | - | - | - |
| • Tricalcium phosphate | - | - | - | - |
| Various properties | | | | |
| • Friction coefficient | 0.092-0.100 | 0.086-0.098 | 0.0.94-0.110 | 0.096-0.120 |
| • Wear amount (µm) | 1 | 1 | 2 | 2 |

**Table 7**

| | Ex. 20 | Ex. 21 | Ex. 22 | Ex. 23 |
|---|---|---|---|---|
| Composition | | | | |
| PTFE | | | | |
| • High Molecular Weight PTFE | 20 | 20 | 20 | 20 |
| • Low Molecular Weight PTFE | - | - | - | - |
| Waxes | | | | |
| Hydrocarbon-based Waxes | | | | |
| • Polyethylene wax | 10 | 10 | 20 | - |
| • Paraffin wax | 10 | 10 | - | - |
| • Micro crystalline wax | - | - | - | 20 |
| Higher-fatty acid | | | | |
| • Stearic acid | 10 | 10 | 10 | 10 |
| Melamine cyanurate | 30 | 30 | 30 | 30 |
| Metallic soap | | | | |
| • Lithium stearate | - | - | - | - |
| • Zinc stearate | - | - | - | - |
| • Calcium stearate | - | - | - | - |
| Polyethylene Resin | | | | |
| • HDPE | 10 | - | - | - |
| • LDPE | - | 10 | 10 | - |
| • HMWPE | - | - | - | 10 |
| Phosphates | | | | |
| • Calcium pyrophosphate | 10 | 10 | - | 10 |
| • Tricalcium phosphate | - | - | 10 | - |
| Various properties | | | | |
| • Friction coefficient | 0·076-0.080 | 0.074-0.082 | 0.084-0.098 | 0.086-0.096 |
| • Wear amount (µm) | 4 | 3 | 3 | 4 |

**Table 8**

| | Comp. Ex. 1 | Comp. Ex. 2 | Comp. Ex. 3 |
|---|---|---|---|
| Composition | | | |
| PTFE | | | |
| • High Molecular Weight PTFE | - | 18.8 | 50 |
| • Low Molecular Weight PTFE | 10.5 | - | - |
| Waxes | | | |
| Hydrocarbon waxes | | | |
| • Paraffin wax | 2 | - | 40 |
| Melamine cyanurate | - | - | - |
| Metallic soap | | | |
| • Lithium stearate | 1 | - | 10 |
| Polyethylene Resin | | | |
| • LDPE | 1.5 | - | - |
| Lead | 85 | 79.6 | - |
| Lubricant oil | - | 1.6 | - |
| Various properties | | | |
| • Friction coefficient | 0·099-0.110 | 0.089-0.120 | 0.100-0.145 |
| • Wear amount (µm) | 2 | 8 | 35 |

In the above tables, as a low molecular weight PTFE, "LUBLON L-5 (tradename)" produced by Daikin Industries, Ltd. was used; as a microcrystalline wax, "HI-MIC-1080 (tradename)" produced by Nippon Seiro Co., Ltd. was used; as a HDPE, "HIZEX (tradename) produced by Mitsui Chemicals Corporation was used; as a LDPE, "FLO-THENE G701 (tradename)" produced by Sumitomo Seika Chemicals Co., Ltd. was used; and as a HMWPE, "LUBMER (tradename)" produced by Mitsui Chemicals Co. Ltd. was used.

As apparently recognized from the above results, it was confirmed that the sliding member obtained by embedding the solid lubricant of the present invention in the sliding surface of the sliding member body showed excellent sliding properties under low speed and high-load conditions, which sliding properties were identical to or higher than those of the conventional sliding member obtained by embedding the lead-containing solid lubricant obtained in Comparative Examples 1 and 2. On the other hand, it was confirmed that the sliding member obtained by embedding the melamine cyanurate-free solid lubricant obtained in Comparative Example 3, in the sliding surface of the sliding member body showed the higher coefficient of friction and large wear amount, thereby exhibiting poor sliding properties.

## Claims

1. A solid lubricant comprising:
20 to 40% by weight of at least one wax selected from hydrocarbon waxes, higher-fatty acids, esters of higher-fatty acid and amides of higher-fatty acid, wherein higher fatty acids have not less than 12 carbon atoms,
20 to 40% by weight of melamine cyanurate, and
20 to 50% by weight of a polytetrafluoroethylene resin.

2. A solid lubricant according to claim 1, further comprising from 5 to 20% by weight of metal soap.

3. A solid lubricant according to claim 1 or 2, further comprising from 5 to 20% by weight of a polyethylene resin.

4. A solid lubricant according to any one of claims 1 to 3, further comprising from 5 to 15% by weight of a phosphate.

5. A sliding member, comprising:
a sliding member body, and
a solid lubricant as defined in any of claims 1 to 4, which is embedded in pores or grooves formed at the sliding surface of the sliding member body.

6. Use of a composition comprising:
20 to 40% by weight of at least one wax selected from hydrocarbon waxes, higher-fatty acids, esters of higher-fatty acid and amides of higher-fatty acid, wherein higher fatty acids have not less than 12 carbon atoms,
20 to 40% by weight of melamine cyanurate, and
20 to 50% by weight of a polytetrafluoroethylene resin,
as a solid lubricant.

7. Use according to claim 6, wherein the composition is embedded in pores or grooves formed at a sliding surface of a sliding member body.

8. Use according to claim 6 or 7, wherein the composition is a solid lubricant as defined in any of claims 2 to 4.

## Patentansprüche

1. Festschmierstoff, umfassend:
20 bis 40 Gew.% mindestens eines Wachses, das aus Kohlenwasserstoffwachsen, höheren Fettsäuren, Estern höherer Fettsäuren und Amiden höherer Fettsäuren ausgewählt ist, worin die höheren Fettsäuren nicht weniger als 12 Kohlenstoffatome haben,
20 bis 40 Gew.% Melamincyanurat und
20 bis 50 Gew.% eines Polytetrafluoroethylenharzes.

2. Festschmierstoff gemäß Anspruch 1, der weiterhin 5 bis 20 Gew.% einer Metallseife umfasst.

3. Festschmierstoff gemäß Anspruch 1 oder 2, der weiterhin 5 bis 20 Gew.% einer Polyethylenharzes umfasst.

4. Festschmierstoff gemäß mindestens einem der Ansprüche 1 bis 3, der weiterhin 5 bis 15 Gew.% eines Phosphats umfasst.

5. Gleitelement, umfassend:
einen Gleitelementkörper und
einen Festschmierstoff, wie in mindestens einem der Ansprüche 1 bis 4 definiert, der in Poren oder Rillen, die auf der Gleitoberfläche des Gleitelementkörpers gebildet sind, eingebettet ist.

6. Verwendung einer Zusammensetzung, umfassend:
20 bis 40 Gew.% mindestens eines Wachses, das aus Kohlenwasserstoffwachsen, höheren Fettsäuren, Estern höherer Fettsäuren und Amiden höherer Fettsäuren ausgewählt ist, worin die höheren Fettsäuren nicht weniger als 12 Kohlenstoffatome haben,
20 bis 40 Gew.% Melamincyanurat und
20 bis 50 Gew.% eines Polytetrafluoroethylenharzes als Festschmierstoff.

7. Verwendung gemäß Anspruch 6, worin die Zusammensetzung in Poren oder Rillen, die auf der Gleitoberfläche eines Gleitelementkörpers gebildet sind, eingebettet ist.

8. Verwendung gemäß Anspruch 6 oder 7, worin die Zusammensetzung ein Festschmierstoff ist, wie in mindestens einem der Ansprüche 2 bis 4 definiert.

## Revendications

1. Lubrifiant solide comprenant :
de 20 à 40 % en poids d'au moins une cire choisie parmi les cires hydrocarbonées, les acides gras supérieurs, les esters d'acide gras supérieur et les amides d'acide gras supérieur, les acides gras supérieurs ne comportant pas plus de 12 atomes de carbone,
de 20 à 40 % en poids de cyanurate de mélamine, et
de 20 à 50 % en poids d'une résine de polytétrafluoroéthylène.

2. Lubrifiant solide selon la revendication 1, comprenant en outre de 5 à 20 % en poids de savon métallique.

3. Lubrifiant solide selon la revendication 1 ou 2, comprenant en outre de 5 à 20 % en poids d'une résine de polyéthylène.

4. Lubrifiant solide selon l'une quelconque des revendications 1 à 3, comprenant en outre de 5 à 15 % en poids d'un phosphate.

5. Elément coulissant, comprenant :
un corps d'élément coulissant, et
un lubrifiant solide selon l'une quelconque des revendications 1 à 4, qui est incorporé dans des pores ou des gorges situés au niveau de la surface coulissante du corps de l'élément coulissant.

6. Utilisation d'une composition comprenant :
de 20 à 40 % en poids d'au moins une cire choisie parmi les cires hydrocarbonées, les acides gras supérieurs, les esters d'acide gras supérieur et les amides d'acide gras supérieur,
de 20 à 40 % en poids de cyanurate de mélamine, et
de 20 à 50 % en poids d'une résine de polytétrafluoroéthylène, en tant que lubrifiant solide.

7. Utilisation selon la revendication 6, dans laquelle la composition est incorporée dans des pores ou des gorges situés au niveau d'une surface coulissante d'un corps d'élément coulissant.

8. Utilisation selon la revendication 6 ou 7, dans laquelle la composition est un lubrifiant solide selon l'une quelconque des revendications 2 à 4.
